# EUROPEAN PATENT APPLICATION

(11) **EP 2 352 331 A1**
(43) Date of publication of application: **03.08.2011**
(21) Application number: 09821533.8
(22) Date of filing: 04.08.2009
(51) Int. Cl.: H04W 36/00, H04W 88/18, H04M 3/54, H04M 3/58

(54) **METHOD, APPARATUS AND SYSTEM FOR CALL SWITCHING**

(30) Priority: 24.10.2008 CN 200810172952
(71) Applicant: Huawei Technologies Co., Ltd., Shenzhen, Guangdong 518129 (CN)
(72) Inventor: LI, Hua, Shenzhen Guangdong 518129 (CN); SUN, Ming, Shenzhen Guangdong 518129 (CN)
(74) Representative: Thun, Clemens
(86) International application number: PCT/CN2009/073063
(87) International publication number: WO 2010/045812

(57) **Abstract**

The present invention discloses a method, an apparatus and a system for transferring a call, and relates to communication technologies. The method includes: receiving dialing information sent by a User Equipment (UE) which has subscribed to a call transfer service, wherein the dialing information comprises an access code, and the UE is in a call with another UE; and transferring the call to a UE corresponding to the dialing information according to the access code. The apparatus includes a receiving module and a call transfer module. The system includes a UE and a call transfer apparatus. The dialing information is received, and the call is transferred to the UE corresponding to the dialing information. Because the call is transferred to a third party without interruption, the user experience is not affected.

## Description

This application claims priority to Chinese Patent Application No. 200810172952.6, filed with the Chinese Patent Office on October 24, 2008 and entitled "METHOD, APPARATUS, AND SYSTEM FOR CALL TRANSFER", which is hereby incorporated by reference in its entirety.

### FIELD OF THE INVENTION

The present invention relates to communication technologies, and in particular, to a method, an apparatus, and a system for call transfer.

### BACKGROUND OF THE INVENTION

Nowadays, with convergence between fixed networks and mobile networks, the fixed network operators, mobile operators and comprehensive operators are exploring new service modes such as call transfer service.

When a call is underway between two users, one of the users transfers the call to a third party, and the third party continues the call with the other user, which is known as call transfer service.

In the prior art, a call is transferred between different parties through Explicit Call Transfer (ECT). Specifically, in a call between two parties, to trigger the call transfer service, one party presses hookflash so that the other party is held and hears a call hold tone, and then the party that presses hookflash dials the number of a third party. When the third party rings or goes off-hook, the party who triggers the call transfer service quits the call, and the call between the other party and the third party is established, namely, the call is transferred. For example, when a call is underway between User Equipment (UE) A and UE B, UE A presses hookflash, and UE B is held; UE B hears the hold tone, and UE A calls UE C; after UE C rings or goes off-hook, UE A quits the call, establishing the call between UE C and UE B.

In the process of developing the present invention, the inventor finds at least the following problems in the prior art:
After the call transfer service is triggered, the call tends to be interrupted, which deteriorates the user experience.

### SUMMARY OF THE INVENTION

The embodiments of the present invention provide a method, an apparatus, and a system for call transfer between different parties without interruption. The technical solution under the present invention is as follows:
A call transfer method includes:
   receiving dialing information sent by a UE which has subscribed to a call transfer service, where the dialing information includes an access code, and the UE is in a call with another UE; and
   transferring the call to a UE corresponding to the dialing information according to the access code.
A call transfer apparatus includes:
   a receiving module, configured to receive dialing information sent by a UE which has subscribed to a call transfer service, where the dialing information includes an access code, and the UE is in a call with another UE; and
   a call transfer module, configured to transfer the call to a UE corresponding to the dialing information according to the access code received by the receiving module.
A call transfer system includes:
   a UE, configured to send dialing information to a call transfer apparatus, where the dialing information includes an access code, and the UE is in a call with another UE; and
   a call transfer apparatus, configured to transfer the call to a UE corresponding to the dialing information according to the access code.

The technical solution under the present invention brings at least the following benefits:
The dialing information is received, and the call is transferred to the UE corresponding to the dialing information. Because the call is transferred to the UE without interrupting the call, the user experience is not affected.

### BRIEF DESCRIPTION OF THE DRAWINGS

FIG. 1 is a flow chart of a call transfer method provided in Embodiment 1 of the present invention;
FIG. 2 shows an IMS-based network architecture for implementing call transfer in Embodiment 1 of the present invention;
FIG. 3 shows interaction in a call transfer method provided in Embodiment 1 of the present invention;
FIG. 4 shows a structure of a call transfer apparatus provided in Embodiment 2 of the present invention; and
FIG. 5 shows a structure of a call transfer system provided in Embodiment 3 of the present invention.

### DETAILED DESCRIPTION OF THE EMBODIMENTS

To make the technical solution, objectives and merits of the present invention clearer, the following describes the embodiments of the present invention in more detail with reference to accompanying drawings.

### Embodiment 1

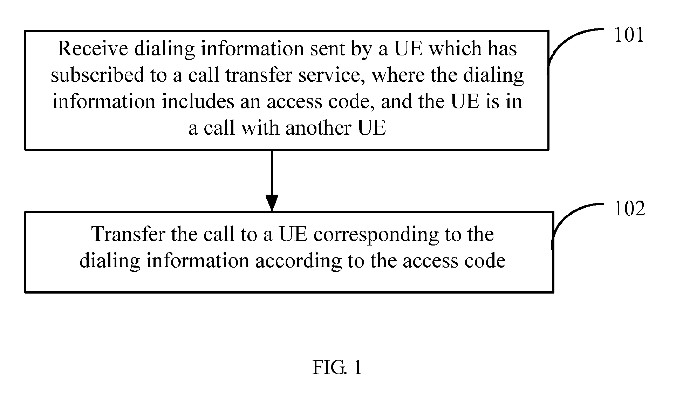

FIG. 1 is a flow chart of a call transfer method provided in Embodiment 1 of the present invention. As shown in FIG. 1, the call transfer method in this embodiment includes the following steps:
101. Receive dialing information sent by a UE which has subscribed to a call transfer service, where the dialing information includes an access code, and the UE is in a call with another UE.
102. transferring the call to a UE corresponding to the dialing information according to the access code.

In the call transfer method provided in this embodiment, the UE which has subscribed to the call transfer service dials an access code (namely, sends dialing information that includes the access code) while being in a call with the other UE, thus establishing the call between the other UE and a third UE. Therefore, the call is transferred to the third party without interruption, and the user experience is not affected.

The call transfer method in this embodiment is applicable to an Internet Protocol Multimedia Subsystem (IMS), a Public Switched Telephone Network (PSTN), or a Public Land Mobile Network (PLMN), and other systems. Taking the IMS as an example, the following expounds the process of transferring a call. The application in other communication systems is similar.

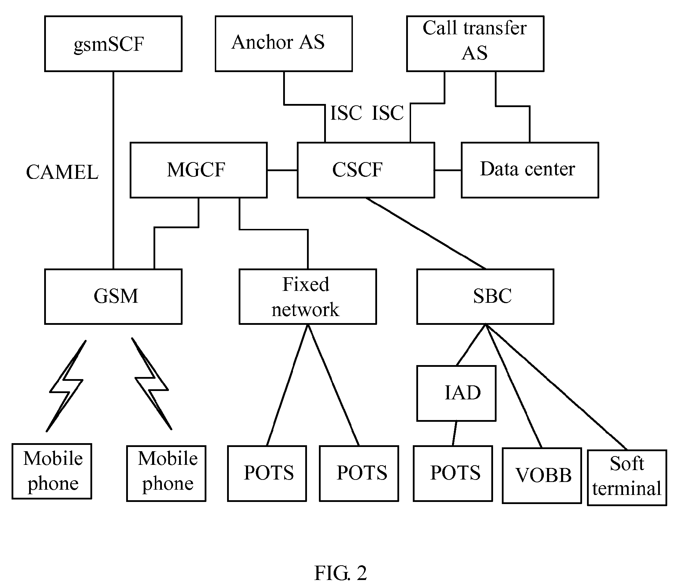

FIG. 2 shows an IMS-based network architecture for implementing call transfer in Embodiment 1 of the present invention. As shown in FIG. 2, a Global System for Mobile Communications Service Control Function (gsmSCF) and an Anchor Application Server (anchor AS) are designed to anchor the calls of users in the existing network to the IMS, so as to implement the call transfer service provided by the IMS.

The gsmSCF is connected with the Global System for Mobile Communications (GSM) through a Customized Application for Mobile Network Enhanced Logic (CAMEL) interface. The GSM network serves various mobile terminals such as mobile phones.

The anchor AS is connected with a Call Session Control Function (CSCF) through an Internal Service Control (ISC) interface.

The CSCF is a core network element in the IMS and is used for triggering the call transfer service. The CSCF is connected with a Voice over Broad Band (VOBB) and a soft terminal through a Session Border Controller (SBC). The SBC is connected with the Plain Old Telephone Service (POTS) through an Integrated Access Device (IAD).

A Media Gateway Control Function (MGCF) is also a core network element in the IMS, and is used for interworking with the devices in the existing network so that the mobile users and the fixed users in the existing network can access the IMS through the CSCF. The MGCF is connected with the terminals such as POTS terminals through the fixed network to provide the call transfer service for the users in the existing network. The existing network includes a GSM, Universal Mobile Telecommunications System (UMTS), Code-Division Multiple Access (CDMA) network, or Time Division Code-Division Multiple Access (TD-CDMA) system.

A call transfer Application Server (AS) is a core control network element on the network side, and is used for implement the functions such as registration, authentication, call control, service triggering, and charging. In this embodiment, the call transfer AS is used for implementing the call transfer service provided herein.

A data center is used for storing user data and service data of call transfer service. Specifically, the data center may be a Home Subscriber Server (HSS) in the IMS, or an internal database in the call transfer AS.

In the foregoing network architecture, the call transfer service provided herein is intended for the mobile users in the existing network, fixed users in the existing network, or IMS users; and the terminals involved in the call transfer service may be a mobile phone, a fixed telephone set, or a soft terminal.

Based on the foregoing network architecture, when a user needs to subscribe to a call transfer service, the user sends the call transfer service data subscribed to by the UE which is held by the user to the call transfer AS.

Specifically, the user may subscribe to the call transfer service of an operator through a portal website of the operator or through short messages. A Business Operation Support System (BOSS) of the operator registers the call transfer service data subscribed to by the user onto the call transfer AS through a service distribution gateway, and the call transfer AS stores the call transfer service data. The BOSS may also store the call transfer service data in a data center.

Further, the call transfer service data includes an identifier of a UE, for example, Internet Protocol Multimedia Public User Identifier (IMPU). According to the service data set by the user, the call transfer service data may include parameters such as "bound user", "bidirectional binding?", "enter three-party service?", and "three-party service duration", or any combination thereof. For example, the call transfer service data may include:
a number of a UE bound to the UE; or
a parameter "Enter three-party service?"; or
a number of a UE bound to the UE, and a parameter "Bidirectional binding?"; or
a parameter "Enter three-party service?", and a parameter "Three-party service duration"; or
a number of a UE bound to the UE, and a parameter "Enter three-party service?"; or
a number of a UE bound to the UE, a parameter "Bidirectional binding?", and a parameter "Enter three-party service?"; or
a number of a UE bound to the UE, a parameter "Enter three-party service?", and a parameter "Three-party service duration"; or
a number of a UE bound to the UE, a parameter "Bidirectional binding?", a parameter "Enter three-party service?", and a parameter "Three-party service duration".

The identifiers of the parameters are not limited. For example, the foregoing parameters may be identified as "IMPU", "BIMPU", "BOTH", "3PTY", and "3PTYT" respectively. The names and meanings of the parameters are shown in Table 1.

**Table 1**

| **Parameter identifier** | **Parameter name** | **Description** |
|---|---|---|
| IMPU | IMPU | This parameter indicates an IMPU of the service subscriber; both SIP URI and TEL URI are supported; this field is mandatory. |
| BIMPU | Bound user | This parameter indicates the number of the bound user; multiple user numbers may be bound, or, no bound user number is input; the default value of this parameter is "null". A bound user is not necessarily an IMS user. When a bound user is not an IMS user, only unidirectional binding is practicable. |
| BOTH | Bidirectional binding? | When a user registers a service, the user may select bidirectional binding or not; if the user selects "Yes", the service data of both the user (service subscriber) and the bound user is updated; if the user selects "No", the service data of only the user (service subscriber) is updated; the default value of this parameter is "No". |
| 3PTY | Enter three-party service? | This parameter indicates whether to enter the three-party service after the call is transferred successfully; the default value is "Yes"; "No" is selected, the Automatic Transfer Switch (ATS) of the transferor releases the call automatically after the destination party answers the call. |
| 3PTYT | Three-party service duration | This parameter indicates the duration which begins when the call is transferred to the three-party successfully and terminates when the ATS of the transferor releases the call automatically; the default value is "null", indicating that the ATS of the transferor does not release the call. |

This parameter "Bound user" is designed to set a number of the bound user. Multiple user numbers may be bound; or, no bound user number is input. The default value of this parameter is "null", indicating that no bound user exists. A bound user is not necessarily an IMS user. When a bound user is not an IMS user, only unidirectional binding is practicable.

For the parameter "Bidirectional binding?", if a user select "Yes", the service data of both the user and the bound user is updated; if the user selects "No", the service data of only the user is updated. The default value of this parameter is "No". Specifically, if the user expects bidirectional binding, the parameter "Bound user" of the user is set to a number of the bound user; the parameter "Bidirectional binding?" is set to "Yes"; the parameter "Bound user" of the bound user is set to a number of the user; the parameter "Bidirectional binding?" of the bound user is set to "Yes"; if the user expects no bidirectional binding, the parameter "Bound user" of the user is set to a number of the bound user (if no bound user exists, this parameter is null), and the parameter "Bidirectional binding?" is set to "No".

The parameter "Enter three-party service" indicates whether to enter the three-party service after the call is transferred successfully; the default value is "Yes"; if "No" is selected, the network releases the call of the transferor automatically after the destination party answers the call.

The parameter "Three-party service duration" indicates the duration which begins when the call is transferred to the three-party successfully and terminates when the ATS of the transferor releases the call automatically; the default value is "null", indicating that the ATS of the transferor does not release the call.

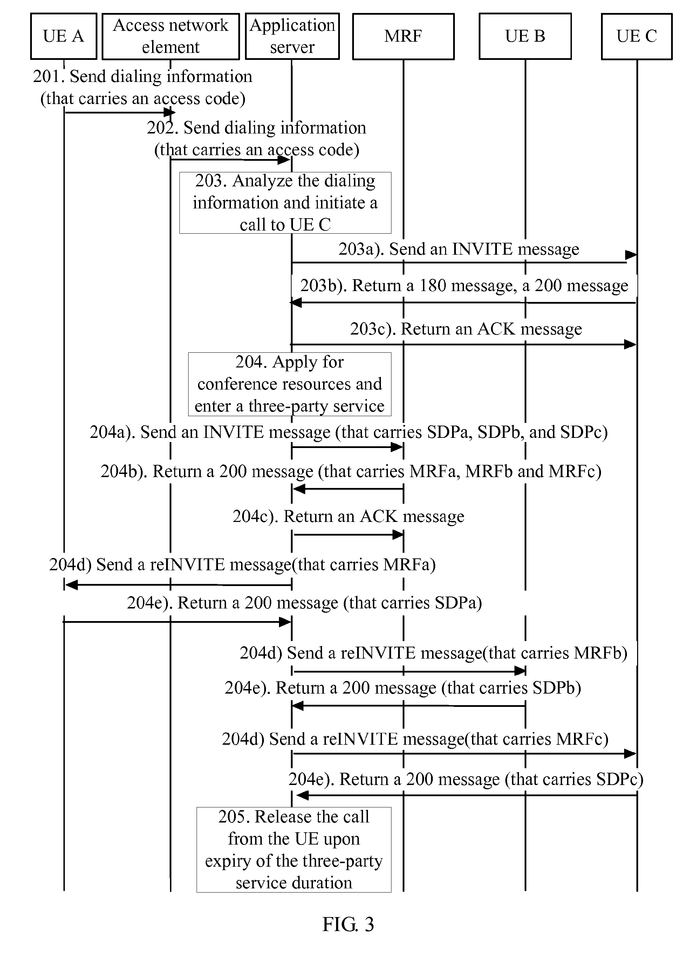

After a user subscribes to the call transfer service, the user can transfer the call. It is assumed that UE A has subscribed to the call transfer service, the user of UE A uses UE A to talk with another user who holds UE B, and the user of UE A expects to transfer the call from UE A to UE C. The process of implementing the call transfer service is described below. UE C and UE A may be held by the same user, for example, when the user expects to transfer a call between a mobile phone and a fixed telephone set of the user; or, the user of UE C may be a third party different from the users of UE A and UE B. FIG. 3 shows interaction in a call transfer method provided in Embodiment 1 of the present invention. Based on the foregoing scenario, as shown in FIG. 3, the call transfer process is as follows:
201. UE A is in a call with UE B. UE A expects to initiate call transfer. The user of UE A dials digits on UE A to transfer the call. The dialing information is transmitted to an access network element based on in-band Dual Tone Multi-Frequency (DTMF) mode in the existing media channel, without interrupting the call between UE A and UE B.

Further, the dialing information may be an access code of the call transfer service, or may be a combination of the access code of the call transfer service and a third-party number (namely, a number of a UE to which the call is transferred); if any bound user exists in the call service data subscribed to by UE A, the user of UE A may dial the access code to initiate a call to the bound user directly; if no bound user exists in the call service data subscribed to by UE A, the user of UE A may dial "access code + third-party number" to initiate a call to the third party. The access code is a service code published by the operator to the user who has subscribed to the call transfer service. That is, the user can dial this access code to trigger the call transfer service. The access code is configurable, for example, configured as _{"}*17#".

Further, the access network element involved in this step may be an MGCF entity or an Access Gateway (AG) entity based on a Session Initiation Protocol (SIP).

202. The access network element reports the user's dialing information to the AS after detecting the in-band DTMF mode signal.

Specifically, the dialing information may be sent through an INFO message or using other methods.

203. After receiving the user's dialing information, the AS analyzes the user's dialing information. If the dialing information includes an access code of the call transfer service, the AS checks whether the user has subscribed to the call transfer service. If the user has not subscribed to the call transfer service, the AS returns a failure message; if the user has subscribed to the call transfer service, the AS checks whether the dialing information includes only the access code. If the dialing information includes only the access code, the AS checks whether any bound user exists in the call transfer service data subscribed to by the user. If no bound user exists, the AS returns a failure message; if any bound user exists, the AS initiates a call to the bound user. If the dialing information includes not only the access code, the AS checks whether the dialing information includes an access code and a third-party number; and, if the dialing information also includes a third-party number, the AS initiates a call to the third party; if the dialing information does not include a third-party number, the AS returns a failure message.

Specifically, assume that the bound user and the third-party number correspond to UE C in this step, the AS initiates a call to UE C. The details of this step are: 203a) The AS initiates a call to UE C by sending a SIP INVITE message; 203b) UE C returns a 180 (ring) message and a 200 (off-hook) message to the AS after receiving the INVITE message; and 203c) The AS returns an acknowledgement (ACK) message to UE C after receiving the off-hook message, thus finishing the call process.

When the user of UE A is bound to UE C, if the user selects bidirectional binding, the call can be transferred between UE A and UE C reciprocally, namely, UE C can transfer the call back to UE A.

204. After the user of UE C goes off-hook to answer the call, the network checks the setting of the parameter "Enter three-party service" in the call transfer service data subscribed to by UE A. If the parameter is set to "No", the network releases the call of UE A, and puts through the call between UE B and UE C; if the parameter is set to "Yes", the network needs to apply to a Multimedia Resource Function (MRF) for conference resources, add UE A, UE B, and UE C into the call for the three-party service, as detailed below:
204a) The AS sends an INVITE message to the MRF. The message carries parameters such as Session Description Protocol (SDP) a, SDPb, and SDPc, which represent the media information of UE A, UE B, and UE C respectively.
204b) The MRF returns a 200 message to the AS. The message carries parameters such as MRFa, MRFb, and MRFc, which respectively represent the media corresponding to the conference endpoints allocated by the MRF to UE A, UE B, and UE C.
204c) The AS returns an ACK message to the MRF.
204d) The AS sends reINVITE messages to UE A, UE B, and UE C respectively. The messages carry MRFa parameter, MRFb parameter, and MRFc parameter respectively.

Further, if UE A, UE B, and UE C are SIP terminals, the AS sends the reINVITE messages to UE A, UE B, and UE C respectively through their respective access network elements. If UE A, UE B, and UE C are ordinary terminals such as POTS, the AS sends the reINVITE messages to their respective access network elements.

204e) UE A, UE B, and UE C return 200 messages to the AS respectively. The messages carry SDPa parameter, SDPb parameter, and SDPc parameter respectively.

In this way, under control of the AS, the media is renegotiated between the MRF and the UEs, thus realizing the three-party service. Any media negotiation mode compliant with the SIP media negotiation principles is appropriate.

205. In the three-party service state, UE A may go on-hook to transfer the call; or, upon expiry of the three-party service duration set in the call transfer service data, the AS releases the call of UE A automatically to transfer the call. The call between UE A and UE B is held on without interruption in the whole transferring process.

Through steps 201-205, the call is transferred from UE A to UE C without interrupting the call between UE A and UE B, which makes it unnecessary for the opposite user to hear the call hold tone and brings good calling experience to the users. Meanwhile, because bound users are set, the vulnerability to errors caused by direct dialing of the third-party number is prevented. The network or the UE itself (UE A) releases the call only after the transfer target (UE C) answers the call or enters the three-party service. This ensures success of transferring the call and solves the problem in the prior art that a call cannot be established due to failure of media negotiation when the service subscriber quits the call.

### Embodiment 2

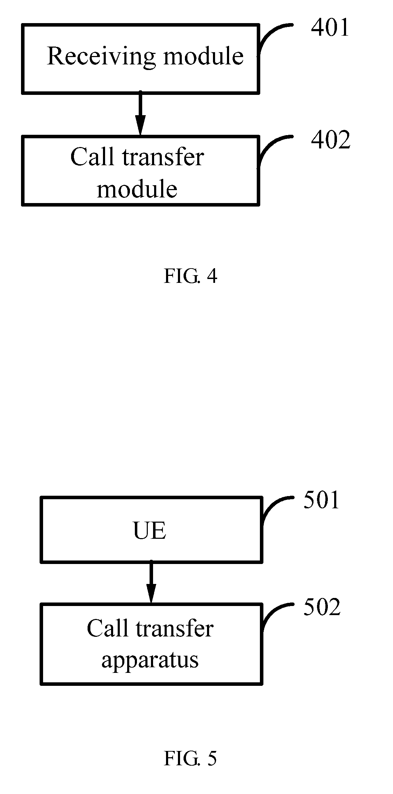

FIG. 4 shows a structure of a call transfer apparatus provided in Embodiment 2 of the present invention. As shown in FIG. 4, a call transfer apparatus provided in this embodiment includes:
a receiving module 401, configured to receive dialing information sent by a UE which has subscribed to a call transfer service, where the dialing information includes an access code, and the UE is in a call with another UE; and
a call transfer module 402, configured to transfer the call to a UE corresponding to the dialing information according to the access code received by the receiving module 401.

Further, the receiving module 401 is configured to receive the call transfer service data subscribed to by the UE, where the call transfer service data includes an identifier of the UE, for example, IMPU.

Further, the call transfer service data received by the receiving module 401 includes:
a number of a UE bound to the UE; or
a parameter "Enter three-party service?"; or
a number of a UE bound to the UE, and a parameter "Bidirectional binding?"; or
a parameter "Enter three-party service?", and a parameter "Three-party service duration"; or
a number of a UE bound to the UE, and a parameter "Enter three-party service?"; or
a number of a UE bound to the UE, a parameter "Bidirectional binding?", and a parameter "Enter three-party service?"; or
a number of a UE bound to the UE, a parameter "Enter three-party service?", and a parameter "Three-party service duration"; or
a number of a UE bound to the UE, a parameter "Bidirectional binding?", a parameter "Enter three-party service?", and a parameter "Three-party service duration".

Specifically, if the call transfer service data received by the receiving module 401 includes a number of a UE bound to the UE, the call transfer module 402 is configured to transfer the call to a bound UE corresponding to the number according to the access code received by the receiving module 401;
if the call transfer service data received by the receiving module 401 includes a parameter "Bidirectional binding?", the call transfer module 402 is configured to transfer the call between the UE and the bound UE reciprocally if bidirectional binding is applied according to the access code received by the receiving module 401;
if the call transfer service data received by the receiving module 401 includes a parameter "Enter three-party service?", the call transfer module 402 is configured to add a UE corresponding to the dialing information into a call between the UE and the other UE if the call needs to enter a three-party service according to the access code received by the receiving module 401;
if the call transfer service data received by the receiving module 401 includes a parameter "Three-party service duration", the call transfer module 402 is configured to release the call of the UE when the set three-party service duration expires according to the access code received by the receiving module 401, and the UE corresponding to the dialing information continues the call with the other UE.

Further, the dialing information received by the receiving module 401 further includes a number of a transfer target UE; and the call transfer module 402 is configured to transfer the call to the transfer target UE corresponding to the number.

The call transfer apparatus provided in this embodiment is based on the same conception as the call transfer AS in the embodiment above for a call transfer method. For the detailed working method of the apparatus, see the embodiment above.

The call transfer apparatus provided in this embodiment transfers the call without interruption, brings good calling experience to the users, ensures success of call transfer, and avoids errors that tend to occur in dialing. Because the call is transferred without interruption, the opposite user need not hear the call hold tone, and enjoys better calling experience.

### Embodiment 3

FIG. 5 shows a structure of a call transfer system provided in the Embodiment 3 of the present invention. As shown in FIG. 5, a call transfer system provided in this embodiment includes a UE 501 and a call transfer apparatus 502:
the UE 501, configured to send dialing information to a call transfer apparatus 502, where the dialing information includes an access code, and the UE 501 is in a call with another UE; and
the call transfer apparatus 502, configured to transfer the call to the UE 501 corresponding to the dialing information according to the access code.

Further, the UE 501 is configured to send subscribed call transfer service data to the call transfer apparatus 502, where the call transfer service data includes an identifier of the UE 501; and the call transfer apparatus 502 is configured to receive the call transfer service data sent by the UE 501.

Further, the subscribed call transfer service data sent by the UE 501 to the call transfer apparatus 502 includes:
a number of a UE bound to the UE 501; or
a parameter "Enter three-party service?"; or
a number of a UE bound to the UE 501, and a parameter "Bidirectional binding?"; or
a parameter "Enter three-party service?", and a parameter "Three-party service duration"; or
a number of a UE bound to the UE 501, and a parameter "Enter three-party service?"; or
a number of a UE bound to the UE 501, a parameter "Bidirectional binding?", and a parameter "Enter three-party service?"; or
a number of a UE bound to the UE 501, a parameter "Enter three-party service?", and a parameter "Three-party service duration"; or
a number of a UE bound to the UE 501, a parameter "Bidirectional binding?", a parameter "Enter three-party service?", and a parameter "Three-party service duration".

Specifically, if the subscribed call transfer service data sent by the UE 501 to the call transfer apparatus 502 includes a number of a UE bound to the UE 501, the call transfer apparatus 502 is configured to receive the call transfer service data sent by the UE 501, and transfer the call of the UE 501 to the bound UE corresponding to the number;
if the subscribed call transfer service data sent by the UE 501 to the call transfer apparatus 502 includes the parameter "Bidirectional binding?", the call transfer apparatus 502 is configured to receive the call transfer service data sent by the UE 501, and transfer the call between the UE 501 and the bound UE reciprocally if bidirectional binding is set;
if the subscribed call transfer service data sent by the UE 501 to the call transfer apparatus 502 includes the parameter "Enter three-party service?", the call transfer apparatus 502 is configured to receive the call transfer service data sent by the UE 501, and add a UE corresponding to the dialing information into a call between the UE 501 and the other UE if the call needs to enter a three-party service;
if the subscribed call transfer service data sent by the UE 501 to the call transfer apparatus 502 includes the three-party service duration, the call transfer apparatus 502 is configured to receive the call transfer service data sent by the UE 501, and release the call of the UE 501 upon expiry of the set three-party service duration, and the UE corresponding to the dialing information continues the call with the other UE.

Further, the dialing information sent by the UE 501 to the call transfer apparatus 502 includes a number of a transfer target UE; and the call transfer apparatus 502 is configured to transfer the call of the UE 501 to a transfer target UE corresponding to the number according to the access code.

The UE and the call transfer apparatus in the call transfer system provided in this embodiment are based on the same conception as UE A and the call transfer AS in the embodiment above for a call transfer method. For detailed working processes, see the embodiment above.

The call transfer system provided in this embodiment transfers the call without interruption, brings good calling experience to the users, ensures success of call transfer, and avoids errors that tend to occur in dialing. Because the call is transferred without interruption, the opposite user need not hear the call hold tone, and enjoys better calling experience.

All or part of the contents in the technical solution provided in the foregoing embodiments may be implemented through software, and the software is stored in a readable storage medium such as computer hard disk, floppy disk, or CD-ROM.

The above descriptions are merely exemplary embodiments of the present invention, but are not intended to limit the scope of the present invention. Any modifications, variations, or replacement that can be easily derived by those skilled in the art without departing from the spirit and scope of the invention shall fall within the protection scope of the present invention.

## Claims

1. A call transfer method, comprising:
receiving dialing information sent by a User Equipment (UE) which has subscribed to a call transfer service, wherein the dialing information comprises an access code, and the UE is in a call with another UE; and
transferring the call to a UE corresponding to the dialing information according to the access code.

2. The call transfer method according to claim 1, wherein: before receiving the dialing information sent by the UE which has subscribed to the call transfer service, the method further comprises :
receiving call transfer service data subscribed to by the UE, wherein the call transfer service data comprises an identifier of the UE.

3. The call transfer method according to claim 2, wherein the call transfer service data further comprises:
a number of a UE bound to the UE; or
a parameter "Enter three-party service?"; or
a number of a UE bound to the UE, and a parameter "Bidirectional binding?"; or
a parameter "Enter three-party service?", and a parameter "Three-party service duration"; or
a number of a UE bound to the UE, and a parameter "Enter three-party service?"; or
a number of a UE bound to the UE, a parameter "Bidirectional binding?", and a parameter "Enter three-party service?"; or
a number of a UE bound to the UE, a parameter "Enter three-party service?", and a parameter "Three-party service duration"; or
a number of a UE bound to the UE, a parameter "Bidirectional binding?", a parameter "Enter three-party service?", and a parameter "Three-party service duration".

4. The call transfer method according to claim 3, wherein:
when the call transfer service data comprises the number of a UE bound to the UE, the transferring of the call of the UE to the UE corresponding to the dialing information comprises: transferring the call of the UE to a bound UE corresponding to the number;
when the call transfer service data comprises the parameter "Bidirectional binding?", the call is transferred between the UE and the bound UE reciprocally if bidirectional binding is set;
when the call transfer service data comprises the parameter "Enter three-party service?", a UE corresponding to the dialing information joins the call between the UE and the other UE if the call needs to enter a three-party service; and
when the call transfer service data comprises the parameter "Three-party service duration", the UE is released upon expiry of the set three-party service duration, and the UE corresponding to the dialing information continues the call with the other UE.

5. The call transfer method according to claim 1, wherein:
the dialing information further comprises a number of a transfer target UE; and
the UE corresponding to the dialing information is the transfer target UE corresponding to the number.

6. A call transfer apparatus, comprising:
a receiving module, configured to receive dialing information sent by a User Equipment (UE) which has subscribed to a call transfer service, wherein the dialing information comprises an access code, and the UE is in a call with another UE; and
a call transfer module, configured to transfer the call to a UE corresponding to the dialing information according to the access code received by the receiving module.

7. The call transfer apparatus according to claim 6, wherein:
the receiving module is further configured to receive call transfer service data subscribed to by the UE, wherein the call transfer service data comprises an identifier of the UE.

8. The call transfer apparatus according to claim 7, wherein the call transfer service data received by the receiving module further comprises:
a number of a UE bound to the UE; or
a parameter "Enter three-party service?"; or
a number of the UE bound to the UE, and a parameter "Bidirectional binding?"; or
a parameter "Enter three-party service?", and a parameter "Three-party service duration"; or
a number of the UE bound to the UE, and a parameter "Enter three-party service?"; or
a number of the UE bound to the UE, a parameter "Bidirectional binding?", and a parameter "Enter three-party service?"; or
a number of the UE bound to the UE, a parameter "Enter three-party service?", and a parameter "Three-party service duration"; or
a number of the UE bound to the UE, a parameter "Bidirectional binding?", a parameter "Enter three-party service?", and a parameter "Three-party service duration".

9. The call transfer apparatus according to claim 8, wherein:
when the call transfer service data received by the receiving module comprises the number of a UE bound to the UE, the call transfer module is configured to transfer the call of the UE to a bound UE corresponding to the number according to the access code received by the receiving module;
when the call transfer service data received by the receiving module comprises the parameter "Bidirectional binding?", the call transfer module is configured to transfer the call between the UE and the bound UE reciprocally if bidirectional binding is set according to the access code received by the receiving module;
when the call transfer service data received by the receiving module comprises the parameter "Enter three-party service?", the call transfer module is configured to add the UE corresponding to the dialing information into the call between the UE and the other UE if the call needs to enter a three-party service according to the access code received by the receiving module; and
when the call transfer service data received by the receiving module comprises the parameter "Three-party service duration", the call transfer module is configured to release the UE upon expiry of the set three-party service duration according to the access code received by the receiving module, and the UE corresponding to the dialing information continues the call with the other UE.

10. The call transfer apparatus according to claim 6, wherein:
the dialing information received by the receiving module further comprises a number of a transfer target UE; and
the call transfer module is specifically configured to transfer the call to the transfer target UE corresponding to the number.

11. A call transfer system, comprising:
a User Equipment (UE), configured to send dialing information to a call transfer apparatus, wherein the dialing information comprises an access code, and the UE is in a call with another UE; and
the call transfer apparatus, configured to transfer the call to a UE corresponding to the dialing information according to the access code.

12. The call transfer system according to claim 11, wherein:
the UE is further configured to send subscribed call transfer service data to the call transfer apparatus, wherein the call transfer service data comprises an identifier of the UE; and
the call transfer apparatus is configured to receive the call transfer service data sent by the UE.

13. The call transfer system according to claim 12, wherein the subscribed call transfer service data sent by the UE to the call transfer apparatus further comprises:
a number of a UE bound to the UE; or
a parameter "Enter three-party service?"; or
a number of the UE bound to the UE, and a parameter "Bidirectional binding?"; or
a parameter "Enter three-party service?", and a parameter "Three-party service duration"; or
a number of the UE bound to the UE, and a parameter "Enter three-party service?"; or
a number of the UE bound to the UE, a parameter "Bidirectional binding?", and a parameter "Enter three-party service?"; or
a number of the UE bound to the UE, a parameter "Enter three-party service?", and a parameter "Three-party service duration"; or
a number of the UE bound to the UE, a parameter "Bidirectional binding?", a parameter "Enter three-party service?", and a parameter "Three-party service duration".

14. The call transfer system according to claim 13, wherein:
when the subscribed call transfer service data sent by the UE to the call transfer apparatus comprises the number of a UE bound to the UE, the call transfer apparatus is configured to receive the call transfer service data sent by the UE, and transfer the call of the UE to a bound UE corresponding to the number;
when the subscribed call transfer service data sent by the UE to the call transfer apparatus comprises the parameter "Bidirectional binding?", the call transfer apparatus is configured to receive the call transfer service data sent by the UE, and transfer the call between the UE and the bound UE reciprocally if bidirectional binding is set;
when the subscribed call transfer service data sent by the UE to the call transfer apparatus comprises the parameter "Enter three-party service?", the call transfer apparatus is configured to receive the call transfer service data sent by the UE, and add the UE corresponding to the dialing information into the call between the UE and the other UE if the call needs to enter a three-party service; and
when the subscribed call transfer service data sent by the UE to the call transfer apparatus comprises the three-party service duration, the call transfer apparatus is configured to receive the call transfer service data sent by the UE, and release the call of the UE upon expiry of the set three-party service duration, and the UE corresponding to the dialing information continues the call with the other UE.

15. The call transfer system according to claim 11, wherein:
the dialing information sent by the UE to the call transfer apparatus further comprises a number of a transfer target UE; and
the call transfer apparatus is specifically configured to transfer the call of the UE to the transfer target UE corresponding to the number according to the access code.
